# EUROPEAN PATENT APPLICATION

(11) **EP 4 087 027 A2**
(43) Date of publication of application: **09.11.2022**
(21) Application number: 22171321.7
(22) Date of filing: 03.05.2022
(51) Int. Cl.: H01M 50/105, H01M 50/186, H01M 50/211, H01M 50/271

(54) **BATTERY MODULE HAVING HIGH COOLING EFFICIENCY**

(30) Priority: 04.05.2021 KR 20210057980
(71) Applicant: SK On Co., Ltd., Seoul 03188 (KR)
(72) Inventor: RHEE, Seo Roh, 34124 Daejeon (KR); CHOI, Yang Kyu, 34124 Daejeon (KR); KANG, Ji Eun, 34124 Daejeon (KR); KIM, Seok Min, 34124 Daejeon (KR); PARK, Sung Chul, 34124 Daejeon (KR); JEONG, Ha Chul, 34124 Daejeon (KR)
(74) Representative: Stolmár & Partner Patentanwälte PartG mbB

(57) **Abstract**

Provided is a battery module having a bidirectional cooling structure. The A battery module comprising: a module case comprising an upper cover plate and a lower cover plate; and at least two pouch cells accommodated in the module case, respectively including sealed portions on three sides thereof, wherein among the sealed portions, a sealed portion from which no electrode lead protrudes is folded in one direction, and the folded sealed portion is positioned on a side of the upper cover plate or the lower cover plate of the module case, wherein a thermal adhesive is attached directly to a pouch side of at least one of the at least two pouch cells located in a direction opposite to a folding direction of the folded sealed portion.

## Description

### CROSS-REFERENCE TO RELATED APPLICATION(S)

This application claims benefit of priority to Korean Patent Application No. 10-2021-0057980 filed on May 4, 2021 in the Korean Intellectual Property Office, the disclosure of which is incorporated herein by reference in its entirety.

### BACKGROUND

### 1. FIELD

The present disclosure relates to a high-voltage battery module having high cooling efficiency, and more particularly, to a battery module provided with bidirectional cooling members.

### 2. DESCRIPTION OF RELATED ART

In general, secondary batteries are repeatedly chargeable and dischargeable and are thus used in devices within various fields such as digital cameras, cellular phones, laptop computers, and hybrid cars. Thus, additional research has been actively conducted into secondary batteries.

Examples of secondary batteries include nickel-cadmium batteries, nickel-metal hydride batteries, nickel-hydrogen batteries, and lithium secondary batteries. Among such secondary batteries, lithium secondary batteries have been extensively researched because lithium secondary batteries have high energy density and high discharge voltages, and lithium secondary barriers have been commercialized and widely used.

In addition, a secondary battery module may be provided by stacking a plurality of battery cells in parallel with each other, electrically connecting the battery cells to each other, and accommodating the battery cells in a case. In addition, such battery modules, respectively including a plurality of battery cells, may be installed in electric vehicles, energy storage systems (ESSs), and the like.

In addition, it is necessary to increase the energy density of battery cells for a longer mileage range and/or for higher performance, but an increase in the energy density of battery cells results in an increase in the amount of heat generation. Thus, there is increasing demand for battery modules having high cooling efficiency to cope with an increase in the amount of heat generation.

In the related art, to address such demand, there have been attempts to improve cooling efficiency by providing a heat sink below a cooling plate of a battery module.

Such a battery module is provided with a cooling plate on the lower side thereof, and the cooling plate is in contact with a unidirectional heat sink and a thermally conductive material, such that heat generated in battery cells of the battery module may be transferred and dissipated externally through contact with the bottoms of the battery cells.

The heat sink and the cooling plate of the battery module dissipate heat through contact with the battery cells and are typically formed of aluminum-based materials having high thermal conductivity to increase cooling efficiency. Furthermore, a thermally conductive member such as a thermally conductive adhesive or a thermally conductive pad has been used to fill a gap between the cooling plate and the battery cells and thus to improve cooling efficiency.

The thermal conductivity of the cooling plate is determined by the basic characteristics of a material used to form the cooling plate, and the thermal conductivity of the thermally conductive member is increased by adding a material such as a ceramic filler to the thermally conductive member. However, such unidirectional cooling is not sufficient to cope with an increase in the amount of heat generation caused by an increase in the energy density of battery cells.

Thus, bidirectional cooling (i.e., both side cooling) techniques have recently been developed to bidirectionally cool battery cells or a battery module by providing a heat sink on an upper side in addition to a heat sink provided on a lower side. Such techniques for example have been applied to some premium platforms for sports cars.

According to a commonly used technique among the recently-developed bidirectional cooling techniques, a liquid injection hole is formed in the upper side of a battery module, and a thermal adhesive, which is conventionally used in an upper portion of a battery module, is injected through the liquid injection hole to fill gaps between battery cells, thereby bidirectionally cooling the battery cells.

### SUMMARY

One aspect of the present disclosure is to improve the performance of a high-voltage battery module by improving the cooling performance of the high-voltage battery module.

Another aspect of the present disclosure is to improve the quick charge ability and lifespan of a battery module by improving the cooling performance of the battery module.

Still another aspect of the present disclosure may provide a battery module including: a module case comprising an upper cover plate and a lower cover plate; and at least two pouch cells accommodated in the module case, respectively including sealed portions on three sides thereof, wherein among the sealed portions, a sealed portion from which no electrode lead protrudes is folded in one direction, and the folded sealed portion is positioned on a side of the upper cover plate or the lower cover plate of the module case, wherein a thermal adhesive is attached directly to a pouch side of at least one of the at least two pouch cells located in a direction opposite to a folding direction of the folded sealed portion.

The sealed portion may be folded by 90°, 180°, 270°, or 540°.

Adjacent two pouch cells may have sealed portions folded in opposite directions.

The thermal adhesive may directly contact the adjacent two pouch cells.

The thermal adhesive may be in contact with the upper cover plate or the lower cover plate of the module case.

The upper cover plate or the lower cover plate, in contact with the thermal adhesive, may comprise an engraved plate having protruding sections protruding downward from the upper cover plate or upward from the lower cover plate.

The thermal adhesive may include at least one selected from the group consisting of a polyurethane-based adhesive, a silicone-based adhesive, and an epoxy-based adhesive.

The thermal adhesive may have a thermal conductivity of 1.0 W/mK or more.

The thermal adhesive may include a thermally conductive filler.

The thermally conductive filler may include at least one selected from the group consisting of alumina, aluminum hydroxide, and silica.

The thermal adhesive comprises a first thermal adhesive attached to an inner surface of the upper cover plate and a second thermal adhesive attached to the lower cover plate.

The folded sealed portion may be fixed by an insulating tape portion attached thereto.

An end of the insulating tape portion may be on a surface of the folded sealed portion.

The insulating tape portion may have an adhesion of 500 gf/in or more and a shear stress of 30 kgf/in² or more.

The insulating tape portion may include at least one pressure-sensitive adhesive or hot-melt adhesive selected from the group consisting of a silicone-based adhesive, an acrylic-based adhesive, a rubber-based adhesive, and an epoxy-based adhesive.

The battery module further comprises an elastic pad included between adjacent two pouch cells.

The elastic pad may have an area greater than an area of each of the pouch cells.

The elastic pad may include release film attached thereto.

Still another aspect of the present disclosure may provide a battery module comprising: a module case comprising an upper cover plate and a lower cover plate; adjacent two pouch cells accommodated in the module case, respectively including sealed portions; sealed portions of the adjacent two pouch cells, from which no electrode lead protrudes, are folded in opposite directions on upper surfaces of the adjacent two pouch cells; a first thermal adhesive directly connecting upper surfaces of the adjacent two pouch cells to the upper cover plate; and a second thermal adhesive connecting lower surface of the adjacent two pouch cells to the lower cover plate, wherein the first thermal adhesive, and the second thermal adhesive provide bidirectional cooling of the adjacent two pouch cells.

The battery module further comprises an elastic pad included between adjacent pouch cells.

The battery module further comprises a gap filler filling a space between lower surfaces of the adjacent two pouch cells.

The adjacent two pouch cells have sealed portions folded in opposite directions.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a view schematically illustrating a pouch cell structure in which an air layer is formed between a thermal adhesive and a pouch cell in an upper portion of a battery module when the thermal adhesive is injected using a conventional method;
FIG. 2 is an exploded perspective view schematically illustrating an example of a battery module;
FIG. 3 is a view illustrating examples A, B, C, and D in which sealed portions of pouches are folded by 90 degrees, 180 degrees, 270 degrees, and 360 degrees, respectively;
FIG. 4 is a view illustrating an example pouch cell which is to be inserted into a battery module and to which a thermal adhesive is applied to a position opposite to a folded sealed portion of the pouch cell according to an embodiment of the present disclosure;
FIG. 5 is a view schematically illustrating an example in which the folded sealed portion of the pouch cell shown in FIG. 4 is fixed by an insulating tape portion;
FIG. 6 is an example view schematically illustrating an upper portion of a pouch cell stack of a battery module in which a thermal adhesive is formed;
FIGS. 7A and 7B are views schematically illustrating the upper side of a battery module in which a thermal adhesive is formed, FIG. 7A being a plan view, and FIG. 7B being a perspective view illustrating only the thermal adhesive;
FIGS. 8A and 8B are views schematically illustrating a structure in which a thermal adhesive is formed on a lower cover plate, FIG. 8A illustrating the lower cover plate on which the thermal adhesive is formed, and FIG. 8B being an exploded perspective view of the structure;
FIG. 9 is a view schematically illustrating a lower portion of a pouch cell stack in a battery module in which a thermal adhesive is formed on a lower cover plate;
FIG. 10 is a view illustrating an example in which a gap filler is formed between pouch cells and a thermal adhesive formed on an inner surface of a lower cover plate;
FIG. 11 schematically illustrates a front view and an exploded perspective view of a battery module having bidirectional cooling members according to an embodiment of the present disclosure; and
FIG. 12 illustrates graphs obtained by measuring the maximum internal temperatures of pouch cells and variations in the temperatures of the upper and lower sides of the pouch cells at the same positions in battery modules of Example 1 and Comparative Examples 1 and 2 during the operations of the battery modules.

### DETAILED DESCRIPTION

According to bidirectional cooling techniques, however, the amount of a thermal adhesive to be injected is quite large, and thus the amount of a ceramic filler added to the thermal adhesive to increase thermal conductivity is also increased, thereby increasing costs.

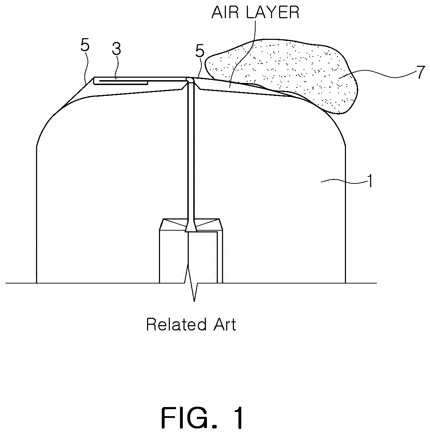

In addition, FIG. 1 illustrates a conventional structure of a thermal adhesive layer formed on the upper side of a pouch cell 1 when a thermal adhesive 7 is injected into a battery module in a liquid state. As shown in FIG. 1, it is difficult to control the shape of the thermal adhesive 7 because the thermal adhesive 7 is injected in a liquid state as described above, and thus the performance of cooling may not be quantitatively estimated. Furthermore, referring to FIG. 1, a sealed portion 3 on the upper side of the pouch cell 1 is folded in a given shape by 90°, 180°, 270°, 540°, or the like. Thus, it may be difficult to fix the position of the folded sealed portion 3, and because an air layer can be formed with a varying thickness according to the position of the folded sealed portion 3, the path of heat transfer may be changed. As a result, the efficiency of heat transfer decreases, and thus it is difficult to precisely maintain the thermal resistance and cooling performance of the battery module, thereby decreasing reliability in cooling. In addition, the thermal adhesive 7 injected in a liquid state may penetrate between pouch cells, and thus, pouches may be damaged.

One embodiment of the present disclosure relates to improving the cooling efficiency of a high-voltage battery module, and more particularly, to a battery module including cooling members respectively for cooling lower and upper sides of the battery modules, thereby having high bidirectional cooling efficiency, and addressing the above-noted concerns with conventional bidirectional cooling.

Hereinafter, embodiments of the present disclosure will be described in more detail with reference to the accompanying drawings.

A battery module according to one embodiment includes: a module case including at least an upper cover plate and a lower cover plate; and two or more pouch cells accommodated in the module case, respectively including sealed portions on three sides thereof, wherein among the sealed portions, a sealed portion from which no electrode lead protrudes is located in an upper portion inside the module case.

The module case includes at least the upper cover plate and the lower cover plate. In addition, the module case may further include a front cover plate, a rear cover plate, and two lateral cover plates. In this case, both the lateral cover plates may be detachably coupled to the lower cover plate or may be provided in one piece with the lower cover plate.

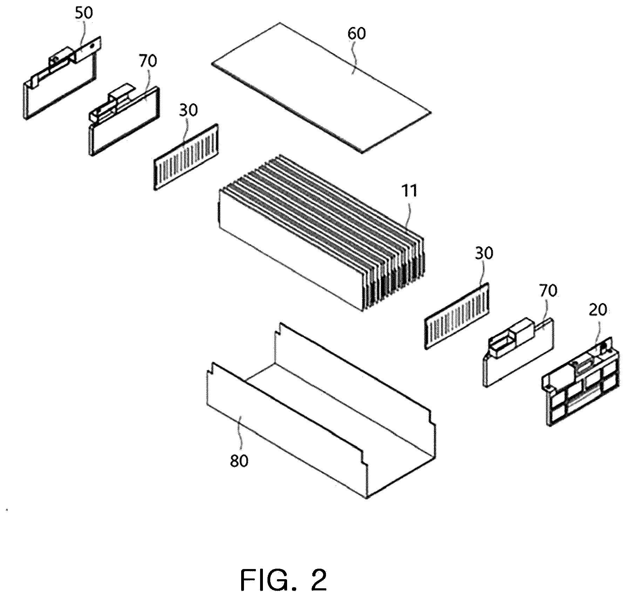

For example, FIG. 2 illustrates an example of the battery module in which a module case at least includes: an upper cover plate 60; a lower cover plate 80 configured to cover the lower sides and both lateral sides of pouch cells 11 and having an one-piece U-shape; the upper cover plate 60 being configured to cover the upper sides of the pouch cells 11; a busbar assemblies 30 and insulating covers 70 configured to cover the front sides and rear sides of the pouch cells 11; a front cover plate 20 configured to cover the front sides of the pouch cells 11; and a rear cover plate 50 configured to cover the rear sides of the pouch cells 11. The shape and size of the module case are not particularly limited and may be appropriately selected according to given conditions such as the type and number of pouch cells 11 accommodated in the module case. Although FIG. 2 illustrates an example in which the lower cover plate 80 has a U-shape, the lower cover plate 80 may be provided such that both lateral cover plates can be detached from the lower cover plate 80. For ease of description and without limiting the invention, the following descriptions of the various embodiments of the present disclosure are given with a structure in which a lower cover plate is provided separate from both lateral cover plates.

The pouch cells 11 are accommodated in the module case. Two or more pouch cells 11 may be accommodated in the module case, and the pouch cells 11 may be electrically connected to each other. The number of pouch cells 11 accommodated in the module case may be appropriately determined according to uses or the like, and there is no particular limit to the number of pouch cells.

Each of the pouch cells 11 is manufactured by accommodating, in a pouch, an electrode assembly including a negative electrode, a positive electrode, and a separator disposed between the negative electrode and the positive electrode, and then thermally sealing the pouch. Thus, each of the pouch cells 11 has sealed portions. That is, the pouch of each of the pouch cells 11 has a sealed portion on at least one side thereof. Although the pouch is not particularly limited, the pouch may have three or four sealed portions as a result of three-side sealing or four-side sealing, and may preferably have three sealed portions forming a three-side sealing structure.

In this case, an electrode lead or electrode leads may protrude from one or two of the sealed portions of the pouch cell 11. A sealed portion from which no electrode lead protrudes may face the upper side of the module case, that is, the upper cover plate 60 of the module case, or may face the lower side of the module case, that is, the lower cover plate 80 of the module case.

Hereinafter, embodiments of the present disclosure will be described with reference to the accompanying drawings which show examples in which folded sealed portions are positioned on the upper cover plate 60. However, the folded sealed portions may be positioned on the lower cover plate 80, and those of ordinary skill will readily understand that the sealed portions can be designed to be positioned on the lower cover plate 80.

To prevent a metal disposed inside the pouch of each of the pouch cells 11 from making contact with the upper cover plate 60 or the like and forming a short circuit, each of the sealed portion may be folded in one direction at the center of the sealed portion such that a metal layer disposed inside the pouch may not be exposed externally.

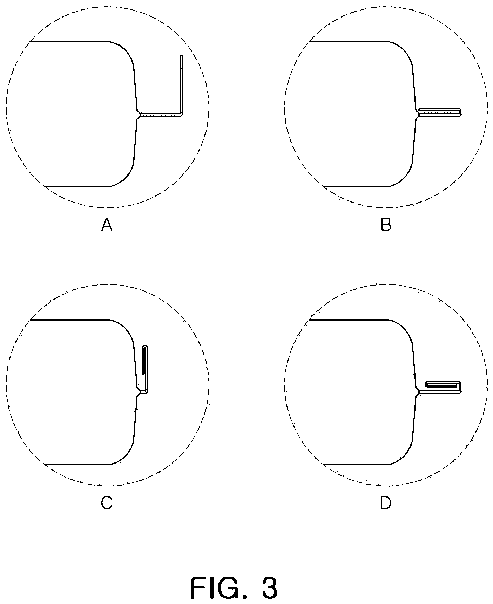

As shown in FIG. 3, sealed portions are not limited to a particular folding method. For example, a sealed portion may be folded by 90 degrees, 180 degrees, 270 degrees, 360 degrees, or 540 degrees. FIG. 3 illustrates examples of folding methods of a sealed portion, and regions A to D in FIG. 3 respectively show 90-degree folding, 180-degree folding, 270-degree folding, and 360-degree folding.

In the case of 0-degree folding, that is, non-folding, a short circuit may be formed by a metal exposed from the inside of a pouch, and energy density may decrease because the length of a cell may be decreased due to a long length of a sealed portion.

Two or more pouch cells 11 may be accommodated in the module case. The pouch cells 11 are accommodated such that among the sealed portions of each of the pouch cells 11, a sealed portion from which no electrode lead protrudes may face the upper cover plate 60 (upper side) or the lower cover plate 80 (lower side) of the module case. That is, the sealed portion of the pouch may face the upper side or the lower side of the module case. However, this is merely a non-limiting example. For ease of description, however, an example in which the sealed portion of the pouch faces the upper side of the module case will be specifically described.

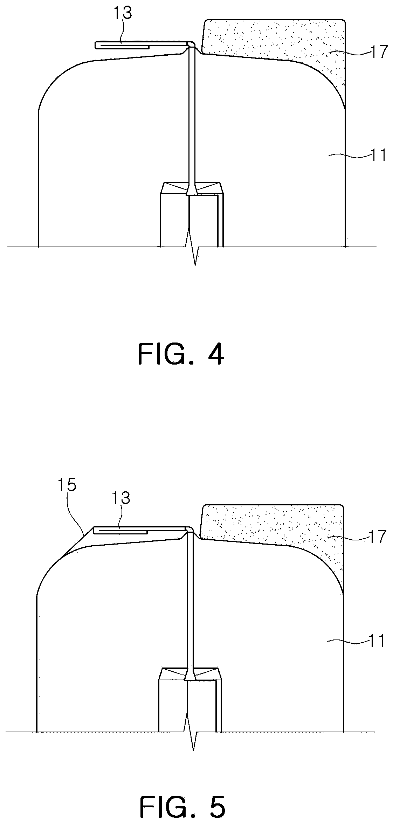

Referring to FIG. 4, in a state in which a sealed portion 13 of a pouch cell 11 is folded in one direction as described above, a thermal adhesive 17 is attached to a side of the pouch of the pouch cell 11 located in a direction opposite to the direction in which the sealed portion 13 is folded. Therefore, the folded sealed portion 13 may be protected, and heat generated in the pouch cell 11 may be dissipated through the thermal adhesive 17. The features shown in FIG. 4 are applicable to one-directional cooling and are applicable to bidirectional cooling in the cooling structures depicted below.

The thermal adhesive 17 may include, but is not limited thereto, a polyurethane-based, silicone-based, or epoxy-based resin as a main component, and an optionally, a curing agent may be included together with the main component. The curing agent may be appropriately selected depending on the main component, and examples of the curing agent are not particularly limited.

The main component and the optional curing agent may independently have a viscosity of 300 Pa ·s or more (based on 1/s at room temperature by ASTM D2196). If the viscosity of the main component and the curing agent is less than 300 Pa ·s, the thermal adhesive 17 is highly flowable. In this case, the thermal adhesive 17 may flow between pouch cells 11, and particularly when the thermal adhesive 17 is applied to an upper portion of a pouch cells 11, the thermal adhesive 17 may flow along the outside of the pouch cell 11 because the upper portion of the pouch cell 11 is not flush with a portion of the pouch cell 11 opposite to the folded sealed portion 13. Thus, the pouch of the pouch cell 11 may be damaged.

The thermal adhesive 17 may include a thermally conductive filler. The thermally conductive filler is for imparting a heat dissipation ability to the thermal adhesive 17 or improving the heat dissipation ability of the heat dissipating adhesive 17. The thermally conductive filler may include alumina, aluminum hydroxide, silica, or the like. The content of the thermally conductive filler is not particularly limited, but may be included in an amount of 55 wt% to 80 wt% based on the total weight of the thermal adhesive 17. When the content of the thermally conductive filler exceeds 80 wt%, the viscosity of the thermal adhesive 17 may be excessively high, and the insulating properties and adhesion of the thermal adhesive 17 may decrease. Moreover, after the thermal adhesive 17 is cured, the thermal adhesive 17 may have a negative effect on the pouch. The thermal adhesive 17 may have a shear strength of 30 kgf/in² or more (measured according to ASTM D5656 by removing release film from the thermal adhesive 17 and attaching the thermal adhesive 17 to a SUS substrate at room temperature). The thermal adhesive 17 may have high shear strength, and the upper limit of the shear strength of the thermal adhesive 17 is not particularly limited. For example, the thermal adhesive 17 may have a shear strength of 100 kgf/in² or less. In addition, the thermal adhesive 17 may have a 180-degree peel strength of 500 gf/in (ASTM D1000) or more.

The folded sealed portion 13 may be fixed by attaching an insulating tape portion 15 (refer to FIG. 5) to the sealed portion 13. The insulating tape portion 15 may be attached in such a manner that an end of the insulating tape portion 15 is placed on a surface of the folded sealed portion 13, and another end of the insulating tape portion 15 extending in the folding direction of the folded sealed portion 13 is placed on a surface of the pouch cell 11.

That is, if an insulating tape portion 5 is attached as shown in FIG. 1 with insulating tape portion 5 attached along the entire width of the upper side of the pouch cell 1 and having an end of the insulating tape portion 5 being on a surface of a pouch cell 1 in a direction opposite to the folding direction of a sealed portion 3 (instead of the end of the insulating tape portion 5 being only on the sealed portion 3 in a direction of the folding direction as in FIG. 5), an air layer may be formed between the surface of the pouch cell 1 and the insulating tape portion 5.

If a thermal adhesive 7 is attached or applied in a state in which an air layer is formed as described above, the thermal adhesive 7 is placed on the insulating tape portion 5, and thus heat transfer from the pouch cell 1 to the thermal adhesive 7 may be markedly reduced due to the insulation by the air layer formed between the insulating tape portion 5 and the pouch cell 1. In addition, if the thermal adhesive 7 is placed on the insulating tape portion 5, many interfaces would be formed between the pouch cell 1 and an upper cover plate, and thus the efficiency of heat transfer is lowered due to the many interfaces.

However, referring to FIG. 5, in one embodiment, one end of the insulating tape portion 15 is placed on a folded surface of the sealed portion 13, and the thermal adhesive 17 is attached to a side of the pouch cell 11 located in a direction opposite to the folding direction of the sealed portion 13. In this case, the pouch cell 11 and the upper cover plate 60 may be connected to each other through the thermal adhesive 17 with fewer interfaces and no insulative air layer therebetween, and thus heat generated in the pouch cell 11 may be effectively transferred to the upper cover plate 60 through the thermal adhesive 17. The features shown in FIG. 5 are applicable to one-directional cooling and are applicable to bidirectional cooling in the cooling structures depicted below.

The insulating tape portion 15 may include, but is not limited thereto, a pressure-sensitive or hot-melt adhesive including silicone, acrylic, rubber, epoxy, or a combination thereof.

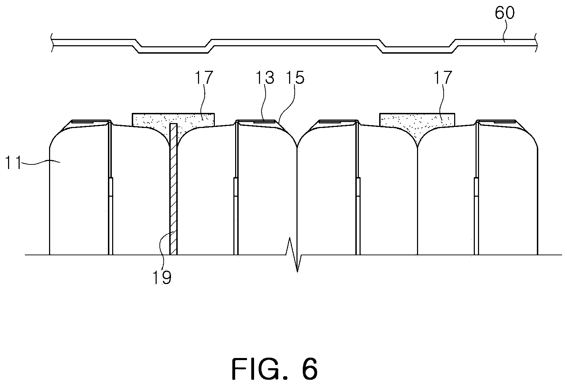

When two or more pouch cells 11 are accommodated in the module case as shown in FIG. 6, adjacent pouch cells 11 may be arranged such that the folding directions of sealed portions 13, which face the upper side of the module case, may be opposite to each other. In this embodiment, the thermal adhesive is applied to two pouch cells adjacent to each other in directions opposite to the folding directions of sealed portions of the two pouch cells; and an upper cove plate 60 is engraved plated having protruding sections protruding downward from the upper cover plate or upward from the lower cover plate.

More specifically, when the sealed portion 13 of a pouch cell 11 is folded to the right, the sealed portions 13 of pouch cells 11 on both sides of the pouch cell 11 may be folded to the left. That is, the pouch cells 11 may be arranged in such a manner that the folding directions of the sealed portions 13 alternate between left and right. In this case, as shown in FIG. 6, the thermal adhesive 17 may be attached to portions of two adjacent pouch cells 11 to which the sealed portions 13 of the two adjacent pouch cells 11 are not folded, and thus heat generated in the two adjacent pouch cells 11 may be efficiently transferred.

The thermal adhesive 17 may be in contact with the module case to facilitate dissipation of heat generated in the pouch cell 11 externally. Specifically, when the folded sealed portion 13 of the pouch cell 11 is disposed to face the upper side of the module case, the upper cover plate 60 and the thermal adhesive 17 may be in direct contact with each other for smooth dissipation of heat, and when the folded sealed portion 13 of the pouch cell 11 is disposed to face the lower side of the module case, the lower cover plate 80 and the thermal adhesive 17 may be in direct contact with each other for smooth dissipation of heat.

Therefore, although the thickness of the thermal adhesive 17 is not particularly limited, the thermal adhesive 17 may have a sufficient thickness to clear the top surfaces of the folded sealed portions 13 for contact with the upper cover plate 60 or the lower cover plate 80.

In addition, the upper cover plate 60 or the lower cover plate 80 may be engraved (that is have sections protruding toward the thermal adhesive 17) . That is, FIG. 6 schematically illustrates an example in which the upper cover plate 60 is engraved. As shown in FIG. 6, the upper cover plate 60 may be engraved to reduce the thickness of the thermal adhesive 17. Owing to this, the thermal adhesive 17 may be used in a small amount, thereby reducing costs. Furthermore, the gap between the pouch cell 11 and the upper cover plate 60 may be further reduced, and thus heat generated in the pouch cell 11 may be more effectively transferred to the upper cover plate 60. The features shown in FIG. 6 are applicable to one-directional cooling and are applicable to bidirectional cooling in the cooling structures depicted below.

According to another embodiment of the present disclosure, the battery module may include an elastic pad 19 (as shown in FIG. 6) between adjacent pouch cells 11. Elastic pads 19 may be disposed between all of the pouch cells 11 at predetermined intervals therebetween, but this is merely a non-limiting example. The elastic pad 19 is not particularly limited, and any elastic pad 19 (such as those generally used in a battery module) may be used in the battery module according to another embodiment of the present disclosure.

The area of the elastic pad 19 may be greater than the area of the pouch cell 11, specifically, the area of the negative electrode of the pouch cell 11. In this case, the thermal adhesive 17 applied to the pouch cell 11 at the upper side of the battery module may be prevented from flowing and penetrating between the pouch cells 17, and thus the surfaces of the pouches of the pouch cells 11 may not be damaged.

The elastic pad 19 is provided in a battery module manufacturing process generally in a state in which a release film is attached to the elastic pad 19, and when the elastic pad 19 is disposed between pouch cells 11, the release film may not be removed from the elastic pad 19. In general, the elastic pad 19 is a foam pad having pores, and if the thermal adhesive 17 is applied in a state in which the release film is removed from the elastic pad 19, the thermal adhesive 17 may permeate the elastic pad 19 through the pores, resulting in a decrease in the performance of the elastic pad 19.

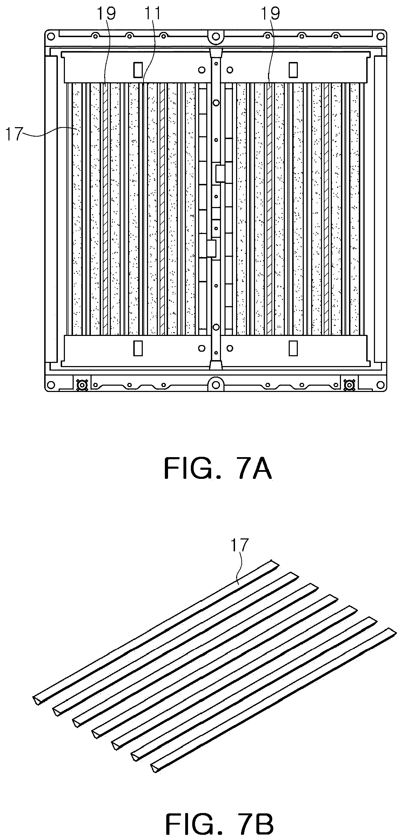

FIGS. 7A and 7B schematically illustrate the upper side of the battery module according to still another embodiment of the present disclosure. FIG. 7A illustrates the upper side of the battery module in a state in which the upper cover plate 60 is removed from the battery module, and FIG. 7B schematically illustrates the thermal adhesive 17 according to yet another embodiment of the present disclosure where the thermal adhesive 17 comprises strips of the adhesive extending in a direction to cover the elastic pads 19.

According to one embodiment of the present disclosure, a battery module may have a bidirectional cooling structure including an upper cooling member and a lower cooling member. For example, a separate cooling member may be provided on the inner surface of an upper cover plate or a lower cover plate which is opposite to the side on which folded sealed portions are located. Hereinafter, an example in which a separate cooling member is provided on a lower cover plate will be described.

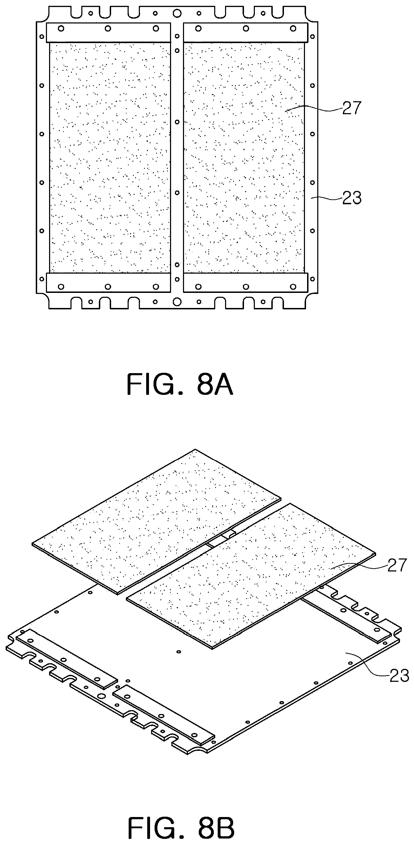

Specifically, as shown in FIGS. 8A and 8B, when a cooling member for pouch cells, that is, a thermal adhesive is applied to the upper side of a module case, that is, an upper cover plate, another thermal adhesive 27 may be attached to a lower cover plate 80 as a separate cooling member. The thermal adhesive 27 may be formed on only a portion of the inner surface of the lower cover plate 80, or may be entirely formed on the inner surface of the lower cover plate 80.

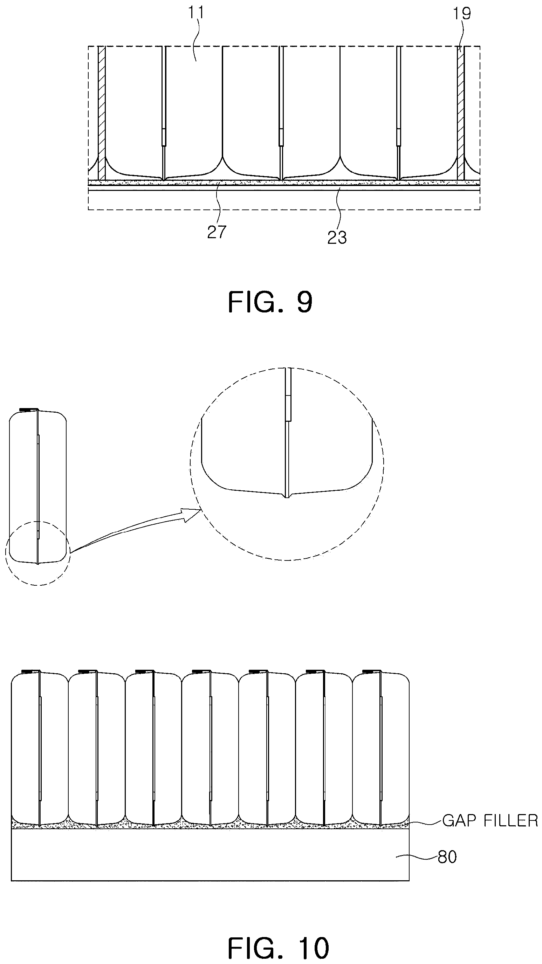

FIG. 8A is a plan view illustrating the lower cover plate 80 to which the thermal adhesive 27 is attached, and FIG. 8B is an exploded perspective view illustrating the lower cover plate 80 to which the thermal adhesive 27 is attached. Furthermore, FIG. 9 is an enlarged view illustrating a portion of the battery module including the lower cover plate 80 to which the thermal adhesive 27 is attached. As described above, downward cooling may be implemented by attaching the thermal adhesive 27 to the lower cover plate 80. The features shown in FIG. 9 are applicable to either one-directional or bidirectional cooling.

In addition, as shown in FIGS. 10, a gap filler may be provided in a space between the pouch cells 11 and the thermal adhesive 27 provided on the inner surface of the lower cover plate 80. The thermal adhesive 27 may be attached to the lower cover plate 80, and the gap filler may be provided in a space between the thermal adhesive 27 and the lower surfaces of the pouch cells 11. Through the gap filler, the pouch cells 11 may be brought into tight contact with the thermal adhesive 27 provided on the lower cover plate 80, and thus heat generated in the pouch cells 11 may be more efficiently dissipated.

FIG. 10 is a partial view illustrating an example in which three-side sealed pouch cells 11 are inserted in a module case. The three-side sealed pouch cells 11 may be inserted in such a manner that sides having no sealed portions are in contact with a lower cover plate 80, and a gap filler including a thermally conductive material is provided between the pouch cells 11 and the lower cover plate 80 (cooling plate) provided on the lower side of the module case. The features shown in FIG. 10 are applicable to either one-directional or bidirectional cooling.

Examples of the thermally conductive material include, but are not limited to, alumina, aluminum hydroxide, silica, and the like. If necessary, the gap filler may further include a binder in addition to the thermally conductive material.

According to another embodiment, the battery module may be cooled in a first direction through the thermal adhesive 17 attached to the top surfaces of the pouch cells 11 of the battery module, and in a second opposite direction through the thermal adhesive 27 provided as a cooling member to the lower surfaces of the pouch cells 11. Thus, the battery module may be bidirectionally cooled and may thus have high cooling efficiency.

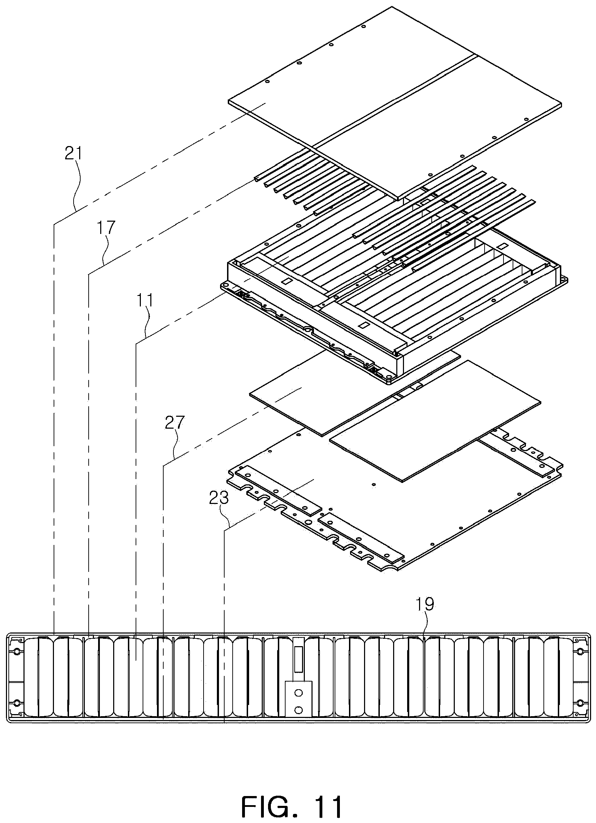

FIG. 11 illustrates a battery module according to one embodiment of the present disclosure. As shown in FIG. 11, the battery module of the embodiment may include a lower cover plate 80 and a thermal adhesive 27 provided on the lower cover plate 80, wherein in a state in which two or more pouch cells 11 are accommodated in the battery module, a thermal adhesive 17 is in direct contact with the two or more pouch cells 11 from the upper side of the battery module, and an upper cover plate 60 is in direct contact with the thermal adhesive 17. Thus, heat generated in the pouch cells 11 may be easily transferred in two directions to the upper cover plate 60 through the thermal adhesive 17 and to the lower cover plate 80 through the thermal adhesive 27, thereby increasing the efficiency of heat transfer.

In the related art described above with reference to FIG. 1, the insulating tape portion 5 for preventing gas ventilation is attached along the entire width of the upper side of the pouch cell 1. In this case, however, thermal resistance increases due to the thermal resistance of the insulating tape portion 5 itself, and the thermal resistance of interfaces increases by the insulating tape portion 5. Moreover, thermal resistance further increases due to the insulation by an air layer formed between the insulating tape portion 5 and the upper side of the pouch cell 1. Thus, upward heat transfer is impeded.

However, according to embodiments of the present disclosure, as shown in FIG. 4, the sealed portion 13 of each pouch cell 11 of the battery module is folded in one direction, and the thermal adhesive 17 is attached to an opposite side on the surface of the pouch cell 11, opposite the folding direction of the sealed portion 13, such that the pouch cells 11 may be directly brought into contact with the upper cover plate 60 or the lower cover plate 80 to minimize thermal resistance and maximize heat transfer efficiency.

### Examples

Hereinafter, the present disclosure will be described in more detail through examples.

### Example 1

In a three-side sealed pouch cell from which electrode leads protrude in two directions, a sealed portion from which no electrode lead protrudes was folded by 270° in one direction and was then fixed by attaching an insulating tape portion thereto.

At that time, as shown in FIG. 5, to attach the insulating tape portion for half (1/2) of an electrode thickness, an end of the insulating tape portion was positioned on a surface the sealed portion, and the other end of the insulating tape portion was positioned on an electrode surface of the pouch cell in the folding direction of the sealed portion

In this manner, ten pouch cells to which the insulation tapes were attached were fabricated. At that time, the sealed portions of five of the pouch cells were folded to the left, and the sealed portions of the other five of the pouch cells were folded to the right.

The pouch cells were stacked as a pouch cell stack while alternating pouch cells having sealed portions folded in different directions, and then the pouch cells were vertically accommodated in a battery module case including a front cover plate, a rear cover plate, a lower cover plate, and a thermal adhesive attached to the entire inner surface of the lower cover plate. At that time, the pouch cells were accommodated in the module case such that the folded sealed portions were directed toward the upper cover plate of the battery module case.

A thermal adhesive was applied to the pouch cell stack accommodated in the battery module case. As shown in FIG. 5, the thermal adhesive was applied to positions opposite to the folded sealed portions.

Thereafter, the battery module case was covered with an upper cover plate. In this manner, a battery module was fabricated.

### Comparative Example 1

As shown in FIG. 1, to attach an insulating tape portion for the entire electrode thickness, an end of the insulating tape portion was positioned on an electrode side of a pouch cell in a folding direction, and the other end of the insulating tape portion was positioned on an opposite electrode side of the pouch cell in the folding direction. In this manner, a battery module was fabricated by the same method as the method in Example 1, except that the insulating tape portion was attached for the entire cell thickness.

### Comparative Example 2

A battery module was fabricated in the same manner as in Example 1, except that an insulating tape portion was not attached and a thermal adhesive was not applied to the inner surface of a lower cover plate.

### Evaluation of heat dissipation

During the operations of the battery modules fabricated in Example 1 and Comparative Examples 1 and 2, the maximum internal temperatures of the pouch cells accommodated in the battery modules, and variations in the temperatures of the upper and lower sides of the pouch cells were measured at the same positions in the battery modules, and results thereof are shown in Table 1 and FIG. 2.

**[Table 1]**

| | Maximum in-cell temperature (°C) | Minimum temperature at upper or lower cover plate (°C) | Thermal resistance (K/W) |
|---|---|---|---|
| Comparative example 1 | 32.7 | 28.3 | 0.49 |
| Comparative example 2 | 35.8 | 30.25 | 0.69 |
| Example 1 | 31.7 | 28.1 | 0.45 |

Referring to Table 1, the difference between the maximum in-cell temperature and the temperature of a cell upper side was 4.4°C in Comparative Example 1 in which a cooling structure was provided for bidirectional cooling through upper and lower cover plates, but an insulating tape portion was attached over the entire cell thickness after a sealed portion was folded. The difference between the maximum in-cell temperature and the temperature of a cell upper side was 5. 6°C in Comparative Example 2 in which a cooling structure was provided for unidirectional cooling through a lower cover plate, and a separate insulating tape portion was not attached after a sealed portion was folded.

However, the difference between the maximum in-cell temperature and the temperature of a cell upper side was 3.6°C in Example 1 in which a cooling structure was provided for bidirectional cooling through upper and lower cover plates, and the insulating tape portion was attached only to the thickness of a cell in the folding direction of a sealed portion after a sealed portion was folded.

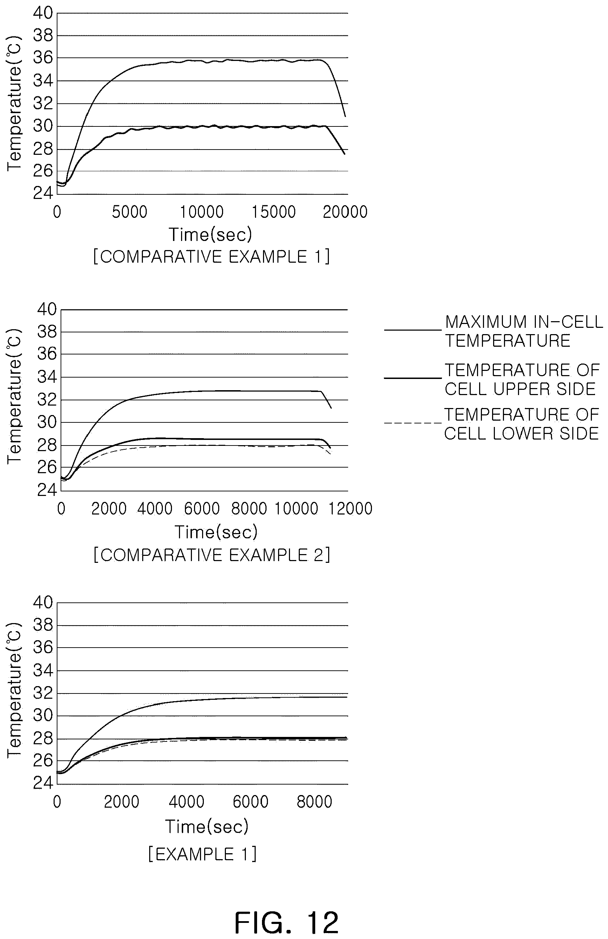

Furthermore, comparing Comparative Example 1 and Example 1 each having a structure for cooling both in upward and downward directions with reference to FIG. 12, Comparative Example 1 exhibits a difference between the temperature of a cell upper side and the temperature of a cell lower side, that is, a cooling efficiency difference between upper and lower sides. However, Example 1 exhibits substantially no difference between the temperature of a cell upper side and the temperature of a cell lower side, that is, the same cooling efficiency both in upper and lower sides. In each of the graphs of Comparative Examples 1 and 2 shown in FIG. 12, a sharp temperature drop appears because heat generation was stopped at an arbitrary time after the temperature reached a constant value. In general, temperature stabilizes at a specific value in 8000 seconds to 10000 seconds, and referring to the graphs of Comparative Examples 1 and 2 and Example 1 shown in FIG. 12, it can be seen that temperature stabilized in 8000 seconds to 10000 seconds and varied in the same pattern in each of the graphs. The temperature ranges of the graphs are different from each other.

As described above, according to embodiments of the present disclosure, upward cooling is implemented in addition to downward cooling by attaching the insulation tape only to a side of a folded sealed portion, and attaching the thermal adhesive to a side opposite to the folded sealed portion, thereby improving the efficiency of upward cooling.

According to one embodiment of the present disclosure, high cooling performance may be secured even in the upward direction of the battery module because the thermal adhesive layer made of the thermal adhesive is in direct contact with the pouch cells and the upper cover plate, thereby improving bidirectional cooling performance and more effectively cooling the pouch cells.

In addition, according to one embodiment of the present disclosure, the thermal adhesive having high viscosity is applied to the upper sides of the pouch cells instead of injecting the thermal adhesive through an injection hole as in the prior art. Therefore, the amount and shape of the thermal adhesive may be adjusted as desired, and the shape of the thermal adhesive may be checked such that the performance of cooling may be more quantitatively estimated.

Furthermore, according to one embodiment of the present disclosure, since the thermal adhesive does not penetrate between the pouch cells but is applied to only the upper sides of the pouch cells, the pouch cells may be less damaged.

While various embodiments have been shown and described above, it will be apparent to those skilled in the art that modifications and variations could be made without departing from the scope of the present invention as defined by the appended claims .

## Claims

1. A battery module comprising:
a module case comprising an upper cover plate and a lower cover plate; and
at least two pouch cells accommodated in the module case, respectively including sealed portions on three sides thereof,
wherein among the sealed portions, a sealed portion from which no electrode lead protrudes is folded in one direction, and the folded sealed portion is positioned on a side of the upper cover plate or the lower cover plate of the module case,
wherein a thermal adhesive is attached directly to a pouch side of at least one of the at least two pouch cells located in a direction opposite to a folding direction of the folded sealed portion.

2. The battery module of claim 1, wherein the adjacent two pouch cells have sealed portions folded in opposite directions.

3. The battery module of claim 2, wherein the thermal adhesive directly contacts the adjacent two pouch cells.

4. The battery module of claim 1, wherein the thermal adhesive is in contact with the upper cover plate or the lower cover plate of the module case.

5. The battery module of claim 4, wherein the upper cover plate or the lower cover plate, in contact with the thermal adhesive, comprises an engraved plate having protruding sections protruding downward from the upper cover plate or upward from the lower cover plate.

6. The battery module of claim 1, wherein the thermal adhesive comprises a thermally conductive filler.

7. The battery module of claim 1, wherein the thermal adhesive comprises a first thermal adhesive attached to an inner surface of the upper cover plate and a second thermal adhesive attached to the lower cover plate.

8. The battery module of any one of claims 1 to 7, wherein the folded sealed portion is fixed by an insulating tape portion attached thereto.

9. The battery module of claim 8, wherein one end of the insulating tape portion is on a surface of the folded sealed portion.

10. The battery module of any one of claims 1 to 9, further comprising an elastic pad included between at least adjacent two pouch cells.

11. The battery module of claim 10, wherein the elastic pad has an area greater than an area of main body of each of the pouch cells.

12. A battery module comprising:
a module case comprising an upper cover plate and a lower cover plate;
adjacent two pouch cells accommodated in the module case, respectively including sealed portions;
sealed portions of the adjacent two pouch cells, from which no electrode lead protrudes, are folded in opposite directions on upper surfaces of the adjacent two pouch cells;
a first thermal adhesive directly connecting upper surfaces of the adjacent two pouch cells to the upper cover plate; and
a second thermal adhesive connecting lower surfaces of the adjacent two pouch cells to the lower cover plate,
wherein the first thermal adhesive, and the second thermal adhesive provide bidirectional cooling of the adjacent two pouch cells.

13. The battery module of claim 12, further comprising an elastic pad included between adjacent two pouch cells.

14. The battery module of any one of claims 12 to 13, further comprising a gap filler filling a space between lower surfaces of the adjacent two pouch cells.

15. The battery module of any one of claim 12 to 14, wherein the adjacent two pouch cells have sealed portions folded in opposite directions.
